Europäisches Patentamt

European Patent Office

Office européen des brevets

(11) Publication number: **0 182 149**
**B1**

# EUROPEAN PATENT SPECIFICATION

(45) Date of publication of patent specification: **29.03.89**

(51) Int. Cl.⁴: **G 21 C 3/32, G 21 C 19/26**

(21) Application number: **85113722.4**

(22) Date of filing: **29.10.85**

(54) A tool for removing and replacing locking tubes of reconstitutable nuclear fuel assemblies.

(30) Priority: **09.11.84 US 670418**

(43) Date of publication of application:
**28.05.86 Bulletin 86/22**

(45) Publication of the grant of the patent:
**29.03.89 Bulletin 89/13**

(84) Designated Contracting States:
**BE DE FR GB IT SE**

(56) References cited:
**FR-A-2 360 963**
**FR-A-2 407 552**
**FR-A-2 417 828**
**GB-A- 967 203**
**US-A-1 365 857**

(73) Proprietor: **WESTINGHOUSE ELECTRIC CORPORATION**
**Westinghouse Building Gateway Center**
**Pittsburgh Pennsylvania 15222 (US)**

(72) Inventor: **Shallenberger, John Milton**
**120 W. Chapel Ridge Road**
**Pittsburgh Pennsylvania 15238 (US)**
Inventor: **Ferlan, Stephen Joseph**
**895 Rita Drive**
**Pittsburgh Pennsylvania 15221 (US)**

(74) Representative: **Patentanwälte Dipl.-Ing. R. Holzer Dipl.-Ing. (FH) W. Gallo**
**Ludwigstrasse 26**
**D-8900 Augsburg (DE)**

Courier Press, Leamington Spa, England.

## Description

The present invention relates generally to fuel assemblies for nuclear reactors and, more particularly, to a tool and method for removing a locking tube from and replacing it in a locking position in a removable top nozzle of a reconstitutable fuel assembly.

In most nuclear reactors, the reactor core is composed of a large number of elongated fuel assemblies. Conventional designs of these fuel assemblies include a plurality of fuel rods and control-rod guide thimbles held in an organized array of grids spaced along the fuel assembly and attached to the control rod guide thimbles. Top and bottom nozzles on opposite ends of the fuel assembly are secured to the guide thimbles which extend slightly above and below the ends of fuel rods. At the top end of the fuel assembly, the guide thimbles extend into passageways formed in the adapter plate of the top nozzle and therein are connected to the adapter plate. The guide thimbles may each include an upper sleeve for attachment to the top nozzle.

During operation of such fuel assembly in a nuclear reactor, some of the fuel rods may occasionally develop cracks along their lengths, due primarily to internal stresses, through which cracks radioactive fission products might seep into the primary coolant of the reactor during operation or might pass into a flooded reactor cavity during refueling or into the coolant circulated through pools where the spent fuel assemblies are stored. Since the fuel rods are part of the unitary assembly including the guide thimbles welded to the top and bottom nozzles, it is difficult to detect and to remove any failed fuel rods.

Until recently, in order to gain access to these rods, it was necessary to remove the affected assembly from the nuclear reactor core and then break the welds which secured the nozzles to the guide thimbles. In so doing, the destructive action often rendered the fuel assembly unfit for further use in the reactor because of enough damage done to both the guide thimbles and the nozzle to prohibit rewelding.

In view of the high cost associated with replacing fuel assemblies, considerable interest has arisen in reconstituting fuel assemblies in order to minimize operating and maintenance expenses. The general approach to making a fuel assembly reconstitutable is to provide it with a removable top nozzle removably mounted on the upper ends of the control-rod guide thimbles by means of an attaching structure which includes a plurality of outer sockets defined in an adapter plate of the top nozzle, a plurality of inner sockets each formed on the upper end of a guide thimble, and a plurality of removable locking tubes inserted in the respective inner socket to maintain them in locking engagement with the outer sockets. Each outer socket is in the form of a passageway extending through the adapter plate and having an annular groove formed in the side wall thereof. Each inner socket is in the form of a hollow upper end portion of the guide thimble having an annular bulge which seats in the annular groove when the guide thimble end portion is inserted in the adapter plate passageway. A plurality of elongate axial slots are provided in the guide-thimble upper end portion to permit inward elastic collapse of the slotted portion so as to allow the larger bulge diameter to be inserted within and removed from the annular circumferential groove in the passageway of the adapter plate. In this manner, the inner socket of the guide thimble is inserted into and withdrawn from locking engagement with the outer socket.

The locking tube is inserted from above the top nozzle into a locking position in the hollow upper end portion of the guide thimble forming the inner socket. When inserted in its locking position, the locking tube retains the bulge of the inner socket in its expanded locking engagement with the annular groove and prevents the inner socket from being moved to a compressed releasing position in which it could be withdrawn from the outer socket. In this manner, the locking tubes maintain the inner sockets in locking engagement with the outer sockets, and thereby assure that the top nozzle will remain affixed to the upper ends of the guide thimbles. In order to secure the locking tubes against loosening under vibration, suitable means may be provided, such as a bulge formed in the upper portion of each locking tube to interlock with the groove defined on the inside of the circumferential bulge in the upper end portion of the guide thimble.

It is the object of the invention to provide a tool enabling locking tubes in an end nozzle of a reconstitutable fuel assembly to be removed and replaced effectively and efficiently.

The invention accordingly resides in a tool for removing a locking tube from a locking position within a guide-thimble end portion extending into, and held locked by the locking tube within, a passageway formed in a nozzle adapter plate of a reconstitutable nuclear fuel assembly, characterized by an elongated tubular force transmitting member; a force receiving structure connected to the force transmitting member at one end thereof; an elongate locking-tube engaging member connected to and extending axially from the opposite end of the tubular force transmitting member, said locking-tube engaging member having a diametric dimension such as to fit through the locking tube, and including a circumferentially expandable and collapsible portion; an axially movable shaft means extending through the tubular force transmitting member and toward the expandable and collapsible portion of the locking-tube engaging member; actuating means connected to the shaft means and operable to effect movement of the latter between two axial positions relative to the force transmitting member; and means connected to the shaft means and cooperable with said expandable and collapsible portion of the locking-tube engaging member in a manner such as, upon movement of the shaft means to one of said axial positions, to expand said expandable and collapsible portion into force transmitting relationship with respect to said locking tube, and, upon movement of the shaft means to the other of said axial positions, to cause the expandable and collapsible portion to collapse out of said force transmitting relationship with the locking tube.

When used for removing a locking tube from a guide-thimble extension or socket, the elongate locking-tube engaging member of the tool is inserted through the locking tube to a predetermined extent depending upon the length of the locking tube and chosen so as to place the expandable and collapsible portion of the locking-tube engaging member into cooperable relationship with the locking tube. When the tool is thus positioned, its actuating means is operated to expand the expandable and collapsible portion into force transmitting relationship with the locking tube, whereafter a force can be applied to the force receiving structure which, being transmitted to the locking tube, causes the latter to be axially withdrawn from its locking position within the guide-thimble extension or socket.

This operation is repeated for each locking tube used in conjunction with a guide-thimble extension or socket to secure the nozzle of the fuel assembly in place. The tool can be long enough to permit the removal (and subsequent replacement) of locking tubes to be carried out through remote operation and with the fuel assembly submersed in a work station within liquid coolant.

Since the locking tubes are friction fit within the guide-thimble extensions and usually held therein by means of radial bulges or dimples, sufficient force must be applied to dislodge the bulges and/or dimples and to overcome the frictional forces opposing the withdrawal of the locking tubes, and the manner of applying such force should be such as not to result in a degree of deformation of the locking tubes causing jamming thereof within their guide-thimble extensions. For this purpose, the tool according to the invention preferably includes a tubular impacting slide which is slidably disposed on the tubular force transmitting member and is operable to deliver locking-tube dislodging impacts to a portion of the force receiving structure.

A preferred embodiment of the invention will now be described, by way of example only, with reference to the accompanying drawings, in which:

Fig. 1 is a fragmentary side elevational view of the upper end of a reconstitutable fuel assembly, with parts partially sectioned and broken away for purpose of clarity, and of the tool embodying the invention and employed in removing the locking tubes from the top nozzle of the assembly;

Fig. 2 is an enlarged side elevational view of the tool shown partially sectioned and in a foreshortened form.

Fig. 3 is an enlarged fragmentary side elevational view of the lower end portion of the tool of Fig. 2, showing its conical nose withdrawn sufficiently from the segmented sleeve of the tool to allow a segmented rim on the sleeve to assume a collapse or released position in which its outside diameter is less than the inside diameter of the locking tube;

Fig. 4 is a view similar to Fig. 3 but showing the conical nose inserted sufficiently into the segmented sleeve of the tool to force the segmented rim on the sleeve to a radially expanded position in which its outside diameter if greater than the inside diameter of the locking tube;

Fig. 5 is a sectional view of the lower end portion of the tool as taken along line 5-5 of Fig. 3; and

Fig. 6 is an enlarged side elevational view, partially in section, of the lower end portion of the tool inserted in the locking tube within a guide thimble, and with the rim on the segmented sleeve of the tool laterally expanded and engaged with the lower edge of the locking tube. In the following description, like reference characters designate like or corresponding parts throughout the several views, and terms such as "forward", "rearward", "left", "right", "upwardly", "downwardly", and the like, are employed as words of convenience not to be construed as limiting terms.

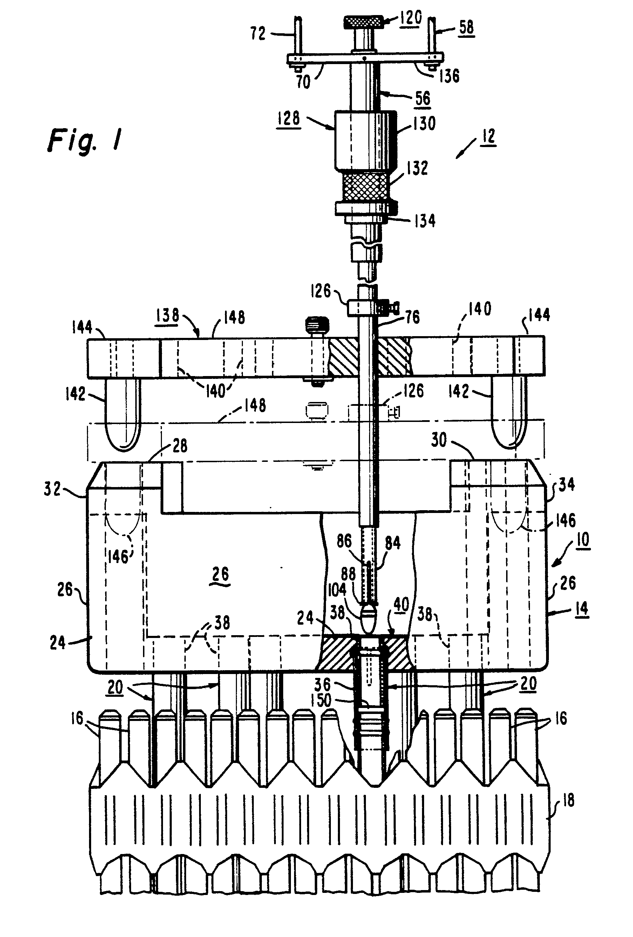

Referring now to the drawings, and particularly to Fig. 1, there are shown an upper end portion of a reconstitutable fuel assembly generally designated with the numeral 10, and a tool embodying the invention and generally designated with numeral 12.

Basically, the fuel assembly 10, being of conventional construction, includes an array of fuel rods 16 held in parallel spaced relationship with respect to one another by several grids such as grid 18, spaced along the fuel assembly. Each fuel rod 16, which is sealed at its opposite ends, contains pellets composed of a fissible material and forming the source of the reactive power generated in the nuclear reactor core into which the assembly 10 is placed. A liquid moderator/coolant, such as water or water containing boron, is pumped upward through the fuel assemblies of the core in order to extract heat generated therein for the production of useful work.

The reconstitutable fuel assembly 10 also includes control-rod guide tubes or thimbles 20 interspersed among the fuel rods and held in parallel spaced relationship with respect thereto by the grids 18 to which the guide thimbles are secured. The opposite ends of the guide thimbles 20 extend a short distance beyond the opposite ends of the fuel rods 16 and are attached respectively to a bottom nozzle (not shown) and a top nozzle 14.

When in use, control rods (not shown) for controlling the fission process are reciprocally movable in guide thimbles 20 by means of a rod cluster control mechanism (not shown) connected to the control rods, as well known in the art.

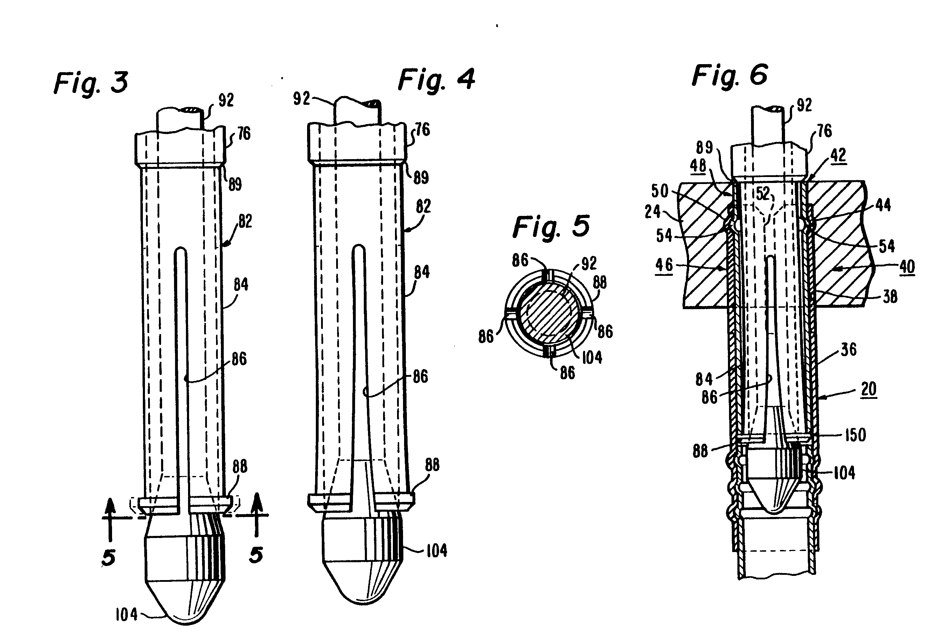

As illustrated in Fig. 1, the top nozzle 14 comprises a housing having a lower adapter plate 24 surrounded by four interconnected, upstanding side walls 26 with raised sets of pads 28, 30 (only one pad in each set being shown) located respectively at pairs of diagonal corners 32, 34 formed by the side walls 26. As seen more clearly from Fig. 6, each control-rod guide thimble 20 has an upper end portion 36 thereof inserted in, and coaxial with, one of several control-rod passageways 38 formed through the adapter plate 24. In order to render the fuel rods 16 accessible, the top nozzle 14 is removably connected to the upper end portions 36 of the guide thimbles 20 by means of attaching structure, generally designated 40, which forms no part of the present invention proper and, hence, will be described herein only as far as necessary for an understanding of the manner in which the tool 12 is utilized.

Top Nozzle Attaching Structure

As best seen from Fig. 6, the attaching structure 40 of the reconstitutable fuel assembly 10 comprises a plurality of outer sockets 42 defined in the adapter plate 24 by the respective passageways 38 and with an annular circumferential groove 44 formed in the peripheral wall of each, a plurality of inner sockets 46 disposed on or formed by the upper end portions 36 of the guide thimbles 20 and inserted into the respective outer sockets 42, and a plurality of removable locking tubes 48 inserted into the respective inner sockets 46 so as to maintain them in locking engagement with the associated outer sockets 42. Each inner socket 46 has an annular circumferential bulge 50 protruding therefrom radially outward, and a plurality of elongate longitudinal slots 52 formed in each inner socket to permit the slotted end portion thereof to yield to compressive force so as to enable the circumferential bulge 50 thereon to be inserted in, and to be removed from, the annular groove of the associated outer socket 42. The annular bulge 50 seats in the annular groove 44 when the inner socket 46 on the guide thimble end portion 36 is inserted in the outer socket 42 defined by the adapter plate passageway 38 and has resiliently returned to a non-collapsed or uncompressed condition.

The locking tubes 48 of the attaching structure 40 are inserted, from above the top nozzle 14, into the respective inner sockets 46 so as to positively lock the latter in position by retaining their bulges 50 positively in locking engagement with the associated annular grooves 44. This prevents the inner sockets 46 from being withdrawn from the outer sockets 42 and, consequently, firmly affixes the top nozzle 14 to the upper end portions 36 of the guide thimbles 20.

Ordinarily, the locking tubes 48 are dimensioned to have a sufficiently tight frictional fit with the side walls of the inner sockets 46 adapter plate passageways 38 to maintain the tubes 48 in their locking positions. As an additional safeguard against axial displacement of the locking tubes 48, e.g. under vibration, each locking tube 48 may be provided with dimples or a circumferential bulge 54 engaged in the annular hollow on the inside of the bulge 50 of the associated inner socket 46 when the locking tube is fully inserted in the inner socket.

Tool for Removing and Replacing Locking Tubes

For inspection, removal, replacement and/or rearrangement of fuel rods 16 contained in the reconstitutable fuel assembly 10, the assembly must be removed from the reactor core and lowered into a work station (not shown) by means of a standard fuel assembly handling tool (not shown). In the work station, the fuel assembly is submerged in coolant, and maintenance operations thereon are performed through manipulation of remotely controlled submersible equipment. One component of such equipment is the tool 12 of the present invention for removing the locking tubes 48 as a first step in removing the top nozzle 14 from the reconstitutable fuel assembly 10. Another component of such equipment is a fixture (not shown) employed, after removal of the locking tubes, for removing the top nozzle 14 from, and for eventually replacing it on, the guide thimbles 20 of the reconstitutable fuel assembly 10.

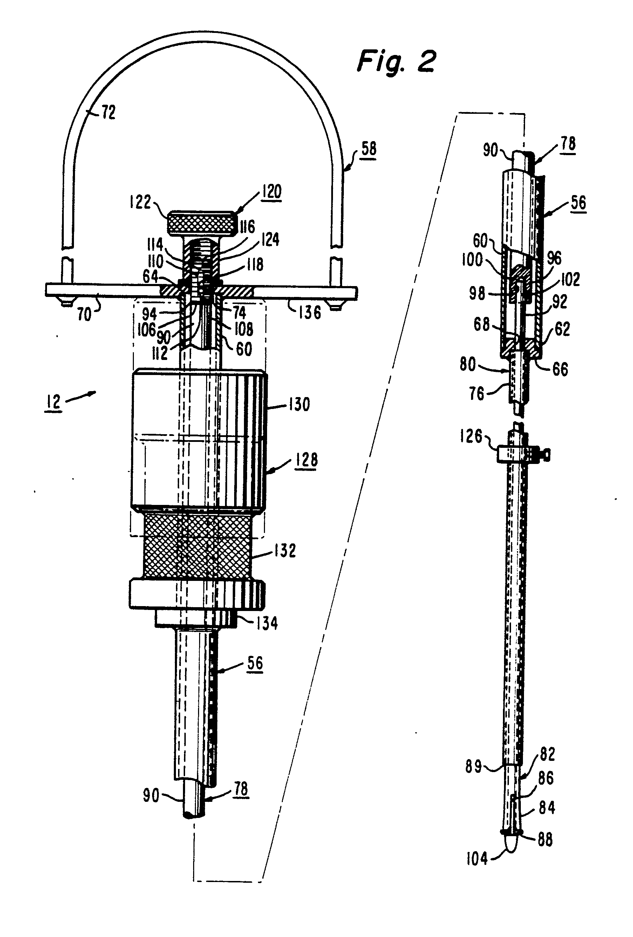

Referring in particular to Figs. 1 and 2, the tool 12 which is suitable for use both in removing and replacing the locking tubes 48, includes an elongated tubular member 56 and a bail assembly 58 attached thereto. The tubular member 56 is formed of a hollow cylindrical tube-like body 60 open at its opposite ends 62, 64, and of an annular plug 66 inserted in the lower end 62 of the body 60 and suitable secured, e.g., welded, thereto. The annular plug 66 has an axial opening 68 extending therethrough. The bail assembly 58 is formed of a generally flat plate 70 extending transverse to the tube-like body 60 and centrally secured, e.g., welded, to the upper end 64 thereof. The bail assembly includes further a bail or handle loop 72 having its opposite ends connected to peripheral portions of the plate 70 disposed opposite each other. The flat plate 70 has a central hole 74 formed through it.

The tool 12 further includes a hollow tubular extension 76 and an elongated actuating-shaft assembly 78. The tubular extension 76 has an upper end portion 80 thereof secured, e.g., welded to the annular plug 66 at the lower end 62 of tubular member 56, the tubular extension 76 being axially aligned with the central opening 68 of the plug 66. A lower end portion 82 of the tubular extension 76 is formed as a segmented sleeve 84 which has therein a plurality of elongate slots 86 (Fig. 5) extending longitudinally from the free, i.e., lower, end thereof, and a segmented annular flange or rim 88 projecting radially outward from the sleeve 84 adjacent its lower end. The upper portion 80 of the tubular extension 76 is larger in diameter than the lower end portion 82, the radial transition between the two portions 80, 82 forming a shoulder 89 which faces toward the lower end portion 82 and serves as a stop abutting the upper edge of each locking tube 48 when the tool 12 is inserted therein, as seen from Fig. 6.

In the preferred embodiment as illustrated, the actuating shaft assembly 78 extends from above the flat plate 70 of the bail assembly 58, through the tubular member 56 and the tubular extension 76, and beyond the rim 88 of the segmented sleeve 84. The shaft assembly 78 comprises a solid shaft 90 which is disposed within the hollow body 60 of the tubular member 56 and extends therein from the upper ends 64 to a location near the lower end 62 thereof, the shaft 90 being supported by a lower shaft extension 92 and an upper shaft stub 94 in coaxial relationship with respect to the tube-like body 60 and in axial alignment both with the central opening 68 in the lower plug 66 and with the central hole 74 in the flat plate 70.

The lower shaft extension 92 of the shaft assembly 78 has an upper end portion 96 thereof inserted into an axial bore or socket 98 formed in a lower end portion 100 of the shaft 90, and has its upper end portion 96 fixedly secured to the shaft 90 by means of a set screw 102 threadedly disposed on the lower end portion 100 of the shaft 90 and tightened against the inserted end portion 96 of the shaft extension 92. From the lower end of the solid shaft 90, the shaft extension 92 extends through the central opening 68 of the plug 66 and through the tubular extension 76. The shaft extension 92 has its lowermost end portion formed as an enlarged cone 104 which normally is so positioned that its maximum diameter is located beyond the lower segmented rim 88 on the segmented sleeve 84 of the tubular extension 76.

The upper shaft stub 94 of the shaft assembly 78 is affixed, e.g., welded, at its lower end 106 to the upper end 108 of the solid shaft 90, and it extends therefrom upward through the hole 74 in the plate 70 of the bail assembly 58. The shaft stub 94 has an elongate slot 110 formed longitudinally therein but with its lower and upper ends 112, 114 spaced respectively from the lower and upper ends 106, 116 of the stub. A pin 118 connected to the flat plate 70 and extending partially across the central hole 74 therein is engaged in the elongate slot 110 of the shaft stub 94 for a purpose which will become clear as the description proceeds.

Finally, the actuating shaft assembly 78 includes an actuating means 120 comprising a cylindrical knob 122, and a sleeve 124 connected to the knob and having an internally threaded axial bore in which the shaft stub 94 is threadedly engaged. Rotation of the knob 122 in one, e.g. clockwise, direction will cause the solid shaft 90 and the shaft extension 92 to move axially toward the flat plate 70 of the bail assembly 58, and rotation of the knob 122 in an opposite, e.g., counterclockwise, direction will cause the solid shaft 90 and the shaft extension 92 to move axially away from the plate 70. The pin 118 serves both to mount the shaft assembly 78 on the flat plate 70 of the bail assembly 58, and to prevent the shaft assembly 78 from rotating together with the knob 122, thereby constraining it to move axially as the knob is being rotated. When the knob 122 is rotated to retract the shaft extension 92 within the tubular extension 76, the conical nose 104 is drawn inward of the segmented sleeve 84, thereby forcing its segmented rim 88 radially outward to its expanded position shown in Figs. 4 and 6. Subsequent rotation of the knob 122 in the opposite direction will move the conical nose 104 outward from the segmented sleeve 84 to the position shown in Fig. 3, thereby allowing the segmented rim 88 to resiliently contract.

The elongated slot 110 in the shaft stub 94 and the stop pin 118 in the flat plate 70, together with the set screw 102, are used to establish the desired degree of insertion of the conical 104 within the segmented sleeve 84. First, the knob 122 is turned so as to move the lower end 112 of the slot 110 against the stop pin 118. This position represents the upper limit to which the actuating shaft assembly 78 can be axially retracted. Incidentally, if the knob 122 is turned in the opposite direction until the upper end 114 of the slot 110 is brought against the stop pin 118, then such position represents the lower limit to which the actuating shaft assembly 78 can be axially extended. Next, the shaft extension 92 is inserted into the socket 98 until the conical nose 104 is inserted within the segmented rim 88 of the segmented sleeve 84 and the circumference of the rim 88 is expanded a desired amount. Then, the set screw 102 is tightened against the shaft extension 92 to fit the axial position of the latter relative to the central shaft 90. The segmented rim 88 is expanded to the desired extent when it extends under the lower edge of the locking tube 48 into which the tubular extension 92 has been inserted, as seen from Fig. 6. In this position, the segmented rim 88 will engage the lower edge of the locking tube 48 from the bottom thereof as the actuating shaft assembly 78 is moved upwards. An annular collar 126 slidably mounted on the tubular extension 92 is positioned and then fixed a predetermined distance from the segmented rim 88 so as to ensure that every time when the tool 12 is inserted into a locking tube, the rim 88 will be positioned adjacent to and just below the lower edge of the locking tube.

It should be noted that, although in the preferred embodiment the tool 12 is designed such that in the extended position of the shaft assembly 78, the conical nose 104 on the lower end of the shaft extension 92 is positioned beyond the segmented rim 88 on the segmented sleeve of the tubular extension 76 so as to cause the segmented rim 88 to expand when the shaft extension 92 is retracted, it would be within the scope of the invention to provide an arrangement wherein the nose 104 is located within the tubular extension 76 and retraction of the shaft assembly 78 allows collapse of the segmented rim 88 whereas extension of the shaft assembly 78 causes expansion of the segmented rim 88. With the preferred design, as the tool 12 is lowered into a locking tube 48, the extended conical nose 104 enters first and clears the passageway of any distortions in the upper end of the tube 48 which may have been caused by irradiation or the like.

The tool 12 also includes a tubular impact slide 128 slidably disposed on the tubular member 56. The tubular impact slide 128 comprises an upper, enlarged ring-like impact head 130, and a lower grip sleeve 132 adjacent thereto. An annular shoulder or ring 134 fixed on the inner tubular member 56 serves as a lower stop limiting the axial downward stroke of the impact slide 128, the lower surface 136 of the flat plate 70 serving as an upper stop limiting the upward stroke of the impact slide. The latter is for use in delivering a sequence of forceful blows against the lower edge of the locking tube 48 having the tool 12 inserted therein, in order to dislodge the tube from its locking position within the stop nozzle 14.

Method of Using Tool to Remove Locking Tube

Once the reconstitutable fuel assembly 10 is placed into the work station and mounted in position for removal of its top nozzle 14 and inspection of its fuel rods 16, a generally rectangular guide plate 138 having a pattern of openings 140 which matches the pattern of passageways 38 in the top nozzle 14 is lowered toward the fuel assembly by means of a long-handled tool (not shown). During this lowering, two guide pins 142 on diagonally opposite corner extensions 144 of the plate 138 enter a pair of holes 146 in corresponding diagonal corners in the top nozzle 14 such that the plate 138 becomes anchored on the top nozzle with its openings 140 aligned with the passageways 38 of the top nozzle.

Then the long-handled tool 12 is lowered into a selected one of the openings 140 in the guide plate 138 and inserted through the top-nozzle passageway 38 and into the locking tube 48 aligned with the opening 140. The tool 12 is lowered into the locking tube 48 until the annular collar 126 engages the top surface 148 of the guide plate 138. In this position, the segmented rim 88 at the lower end of the tool 12 is slightly below the lower edge 150 of the locking tube 48.

The actuating knob 122 is then rotated such as to cause the stop pin 118 to bottom against the lower end 112 of the slot 110 in the stub 94. This causes the shaft extension 92 to be retracted into the tubular extension 76 and causes the conical nose 104 to be drawn into the segmented sleeve 84, whereby the segmented rim 88 is radially expanded to assume an outside diameter exceeding the inside diameter of the tube 48 and thereby take a position directly below and in engagement with the lower edge 150 of the locking tube 48. Then, the tubular impact slide 128 is manually reciprocated axially so as to deliver a series of blows to the underside of the flat plate 70. The force of each blow against the flat plate 70 is transmitted through the tubular member 56, the lower tubular extension 76 and the segmented rim 88 to the lower edge 150 of the locking tube 48, thereby causing the latter to be moved incrementally upward until it is free to be withdrawn from the associated socket 46. Occasionally, a single blow or impact may suffice to dislodge the locking tube 48 from its locking position. If the locking tube 48 has dimples 54 or a bulge in locking engagement with the annular groove in the inner socket 46, the impact forces will cause the dimples to become gradually deformed until their locking engagement is broken.

After withdrawal of the tool 12 with the freed locking tube 48 attached thereto, the tool together with the locking tube is transferred to a disposal container (not shown) where the actuating knob 122 is rotated in the direction, e.g. counterclockwise, causing the shaft extension 92 to be advanced from the tubular extension 76 and the conical nose 104 thus to be moved outwardly from the segmented sleeve 84 so as to enable the segmented rim 88 to contract to its normal position, as shown in Fig. 3, in which its outer diameter is less than the inner diameter of the locking tube 48, thus allowing the tool 12 to be withdrawn from the locking tube which thereupon can drop into the disposal container.

These steps described above are repeated until all of the locking tubes 48 to be removed from the top nozzle 14 have been removed. After the top nozzle 14 has been removed and later replaced, the tool 12 can be utilized again to insert a new set of locking tubes into the inner sockets 46 associated with the respective guide thimbles 20. Basically, this is done simply by reversing the order of the operations performed with the tool 12 in removing a locking tube 48, except that there is no need to operate the impact slide 128 during the reinsertion of locking tubes.

**Claims**

1. A tool for removing and replacing a locking tube disposed in a locking position within a guide-thimble end portion extending into, and held locked by the locking tube within, a passageway formed in a nozzle adapter plate of a reconstitutable nuclear fuel assembly, characterized by the combination comprising:

an elongated tubular force transmitting member (56);

a force receiving structure (58) connected to the force transmitting member at one end thereof;

an elongate locking-tube engaging member (76) connected to and extending axially from the opposite end of the tubular force transmitting member, said locking-tube engaging member having a diametric dimension such as to fit through the locking tube, and including a circumferentially expandable and collapsible portion (84, 86, 88);

an axially movable shaft means (78) extending through the tubular force transmitting member and toward the expandable and collapsible portion of the locking-tube engaging member;

actuating means (120) connected to the shaft means and operable to effect movement of the latter between two axial positions relative to the force transmitting member; and,

means (104) connected to the shaft means and cooperable with said expandable and collapsible portion of the locking-tube engaging member in a manner such as, upon movement of the shaft means to one of said axial positions, to expand said expandable and collapsible portion into force transmitting relationship with respect to said locking tube, and, upon movement of the shaft means to the other of said axial positions, to cause the expandable and collapsible portion to collapse out of said force transmitting relationship with the locking tube.

2. A tool according to claim 1, characterized in that said tubular force transmitting member (56) has slidably disposed thereon a tubular axially reciprocable impacting slide (128) operable to deliver locking-tube dislodging impacts to a portion (70) of said force receiving structure (58).

3. A tool according to claim 2, characterized in that said impacting slide (128) consists of an enlarged cylindrical impacting head (130) engageable with said portion (70) of the force-receiving structure (58), and a tubular grip sleeve (132) axially adjacent the impacting head.

4. A tool according to claim 1, 2 or 3, characterized in that the impact-receiving portion (70) of the force-receiving structure (58) is a transverse plate affixed to said one end of the tubular force transmitting member (56).

5. A tool according to claim 2, 3 or 4, characterized in that said force receiving structure (58) includes a bail-like handle (72) connected to the impact-receiving portion (70).

6. A tool according to claim 1, 2, 3, 4 or 5, characterized in that said elongate locking-tube engaging member (76) is a tube forming a tubular extension of the force transmitting member (56), said shaft means (78) extending through the force transmitting member and thence extending within said tubular extension to said means (104) cooperating with said expandable and collapsible portion (84, 86, 88).

7. A tool according to claim 6, characterized in that said expandable and collapsible portion (84-88) is an axially segmented end portion of said tubular extension (76) including a segmented rim (88) which projects radially outward therefrom.

8. A tool according to claim 7, characterized in that said means (104) which cooperates with the expandable and collapsible portion (84, 86, 88) comprises a conical member which is moved axially in one direction so as to resiliently expand said segmented end portion, together with its segmented rim, upon movement of said shaft means (78) toward said one axial position thereof, and is moved axially in an opposite direction so as to enable the resiliently expanded segmented end portion, together with the segmented rim, to resume a non-expanded condition upon movement of the shaft means toward said other axial position thereof.

9. A tool according to claim 8, characterized in that said shaft means (78) comprises a shaft (90) disposed in the tubular force transmitting member (56), and a shaft extension (92) disposed in said tubular extension (76), said shaft extension (92) being connected at one end thereof to said shaft (90) and having said conical member (104) disposed on the other end thereof.

10. A tool according to any one of the preceding claims, characterized in that said actuating means (120) comprises a rotatable knob (122) threadably coupled to an end portion (108) of said shaft means (78) in a manner such that rotation of said knob (122) in opposite directions causes movement of the shaft means to the respective ones of said axial positions.

**Patentansprüche**

1. Werkzeug zum Ausbauen und Ersetzen eines Arretierungsrohrs, das sich in einer Arretierungsstellung innerhalb eines Führungsrohrendabschnitts befindet, der in eine Bohrung einer Mundstückadapterplatte eines wiederherstellbaren Brennelements hineinragt und dort durch das Arretierungsrohr arretiert ist, gekennzeichnet durch eine Kombination, die aufweist:

ein langes rohrförmiges Kraftübertragungsbauteil (56),

eine kraftaufnehmende Struktur (58), die an ihrem einen Ende mit dem Kraftübertragungsbauteil verbunden ist,

ein längliches Arretierungsrohr-Haltebauteil (76), das mit dem entgegengesetzten Ende des rohrförmigen Kraftübertragungsbauteils verbunden ist und von diesem axial wegragt und eine solche Durchmesserabmessung hat, daß es durch das Arretierungsrohr hindurchpaßt, und das einen umfangsmäßig spreizbaren und verengbaren Teil (84, 86, 88) aufweist,

eine axial verschiebbare Stange (78), die durch das rohrförmige Kraftübertragungsbauteil hindurch und zu dem spreizbaren und verengbaren Teil des Arretierungsrohr-Haltebauteils hin verläuft,

Betätigungsmittel (120), die mit der Stange verbunden und so betätigbar sind, daß eine Verschiebung der Stange zwischen zwei Axialpositionen mit Bezug auf das Kraftübertragungsbauteil bewirkt wird, und

Mitteln (104), die mit der Stange verbunden sind und mit dem spreizbaren und verengbaren Teil des Arretierungsrohr-Haltebauteils in einer Weise zusammenwirkungsfähig sind, daß bei Verschiebung der Stange in eine ihrer beiden Axialpositionen der spreizbare und verengbare Teil in kraftübertragende Anlage mit dem Arretierungsrohr gespreizt wird und bei Verschiebung der Stange in die andere der beiden Axialpositionen das Verengen des spreizbaren und verengbaren Teils aus der kraftübertragenden Anlage mit dem Arretierungsrohr bewirkt wird.

2. Werkzeug nach Anspruch 1, dadurch gekennzeichnet, daß auf dem rohrförmigen Kraftübertragungsbauteil (56) ein rohrförmiges, axial hin- und herbewegbares Aufschlagschiebestück (128) gleitend verschiebbar angeordnet ist,

mit welchem Arretierungsrohr-Lockerungsschläge auf einen Teil (70) der kraftaufnehmenden Struktur (58) ausgeübt werden können.

3. Werkzeug nach Anspruch 2, dadurch gekennzeichnet, daß das Aufschlagschiebestück (128) aus einem vergrößerten zylindrischen Schlagkopf (130), der auf den genannten Teil (70) der kraftaufnehmenden Struktur (58) aufschlagbar ist, und einer rohrförmigen Griffhülse (132) besteht, die sich axial an den Schlagkopf anschließt.

4. Werkzeug nach Anspruch 1, 2 oder 3, dadurch gekennzeichnet, daß der aufschlagaufnehmende Teil (70) der kraftaufnehmenden Struktur (58) eine am einen Ende des rohrförmigen Kraftübertragungsteils (56) befestigte Querplatte ist.

5. Werkzeug nach Anspruch 2, 3 oder 4, dadurch gekennzeichnet, daß die kraftaufnehmende Struktur (58) einen henkelartigen Handgriff (72) aufweist, der mit dem aufschlagaufnehmenden Teil (70) verbunden ist.

6. Werkzeug nach Anspruch 1, 2, 3, 4 oder 5, dadurch gekennzeichnet, daß das längliche Arretierungsrohr-Haltebauteil (76) ein Rohr ist, das eine rohrförmige Verlängerung des Kraftübertragungsbauteils (56) bildet, und daß die Stange (78) durch das Kraftübertragungsbauteil hindurch und folglich innerhalb der genannten rohrförmigen Verlängerung zu den mit dem spreizbaren und verengbaren Teil (84, 86, 88) zusammenwirkenden Mitteln (104) verläuft.

7. Werkzeug nach Anspruch 6, dadurch gekennzeichnet, daß der spreizbare und verengbare Teil (84 bis 88) ein axial segmentierter Endteil der genannten rohrförmigen Verlängerung (76) mit einem segmentierten Rand (88) ist, der davon radial auswärts vorspringt.

8. Werkzeug nach Anspruch 7, dadurch gekennzeichnet, daß die mit dem spreizbaren und verengbaren Teil (84, 86, 88) zusammenwirkenden Mittel (104) ein konisches Bauteil aufweisen, das bei Verschiebung der Stange (78) in Richtung ihrer einen Axialposition axial in einer Richtung bewegt wird, um den segmentierten Endteil zusammen mit seinem segmentierten Rand elastisch zu spreizen, und bei Verschiebung der Stange in ihre andere Axialposition axial in entgegengesetzter Richtung bewegt wird, um den elastisch gespreizten segmentierten Endteil zusammen mit seinem segmentierten Rand seinen nicht gespreizten Zustand wieder einnehmen zu lassen.

9. Werkzeug nach Anspruch 8, dadurch gekennzeichnet, daß die Stange (78) einen Stangenteil (90), der in dem rohrförmigen Kraftübertragungsbauteil (56) angeordnet ist, und eine Stangenverlängerung (92) aufweist, die in der rohrförmigen Verlängerung (76) angeordnet ist und mit einem Ende mit dem genannten Stangenteil (90) verbunden ist und an seinem anderen Ende das konische Bauteil (104) aufweist.

10. Werkzeug nach einem der vorhergehenden Ansprüche, dadurch gekennzeichnet, daß die Betätigungsmittel (120) einen Drehknopf (122) aufweisen, der mit einem Endabschnitt (108) der Stange (78) in solcher Weise schraubend gekuppelt ist, daß eine Drehung des Knopfes (122) in der einen oder anderen Richtung eine Verschiebung der Stange in deren eine oder andere Axialposition bewirkt.

## Revendications

1. Outil pour enlever et remplacer un tube de blocage disposé dans une position de blocage à l'intérieur de la partie d'extrémité d'un tube-guide s'étendant et maintenue bloquée par le tube de blocage, dans un passage formé dans une plaque d'adaptation d'embout d'un assemblage combustible nucléaire reconstituable, caractérisé par le fait que la combinaison comprend:

- une pièce allongée tubulaire (56) transmettant une force;
- une structure (58) recevant une force et connectée à une extrémité de la pièce transmettant une force;
- une pièce allongée (76) d'enclenchement avec un tube de blocage, connectée à l'extrémité opposée de la pièce tubulaire transmettant une force et s'étendant axialement depuis cette extrémité, ladite pièce d'enclenchement avec un tube de blocage ayant une dimension diamétrale telle qu'elle s'ajuste à travers le tube de blocage, et comportant une partie (84, 86, 88) expansible et aplatissable de façon circonférentielle;
- un agencement de tige (78) mobile de façon axiale, s'étendant à travers la pièce tubulaire transmettant une force et situé près de la partie expansible et aplatissable de la pièce d'enclenchement avec le tube de blocage;
- des moyens (120) d'actionnement connectés à l'arbre et pouvant fonctionner pour effectuer le mouvement de cet arbre, entre deux positions axiales par rapport à la pièce transmettant une force, et
- des moyens (104) connectés à l'arbre et pouvant coopérer avec ladite partie expansible et aplatissable de la pièce d'enclenchement avec le tube de blocage, de telle manière que, lors du mouvement de l'agencement de tige vers l'une desdites positions axiales, ces moyens agrandissent ladite partie expansible et aplatissable en la plaçant dans une relation de transmission de force vis-à-vis dudit tube de blocage et que, lors du mouvement de l'agencement de tige vers l'autre desdites positions axiales, ces moyens provoquent l'aplatissement de la partie expansible et aplatissable en supprimant la relation de transmission de force vis-à-vis dudit tube de blocage.

2. Outil selon la revendication 1, caractérisé par le fait que sur ladite pièce tubulaire (56) de transmission de force se trouve un coulisseau tubulaire (128) de percussion pouvant effectuer axialement un mouvement alternatif et pouvant fonctionner de manière à communiquer des chocs de délogement de tube de blocage à une partie (70) de ladite structure (58) de réception de force.

3. Outil selon la revendication 2, caractérisé par le fait que ledit coulisseau (128) de percussion est constituée d'une large tête cylindrique (130) de percussion, pouvant venir en contact avec ladite partie (70) de la structure (58) de réception de force, et un manchon tubulaire (132) de serrage, axialement adjacent à la tête de percussion.

4. Outil selon l'une quelconque des revendications 1, 2 ou 3, caractérisé par le fait que la partie (70) de réception de choc de la structure (58) de réception de force est une plaque transversale fixée à l'une desdites extrémités de la ·pièce tubulaire (56) de transmission de force.

5. Outil selon l'une quelconque des revendications 2, 3 ou 4, caractérisé par le fait que ladite structure (58) de réception de force comporte une poignée (72) en forme d'arceau connectée à la partie (70) de réception de choc.

6. Outil selon l'une quelconque des revendications 1, 2, 3, 4 ou 5, caractérisé par le fait que ladite pièce allongée (76) d'enclenchement avec le tube de blocage est un tube formant un prolongement tubulaire de la pièce (56) de transmission de force, ledit agencement de tige (78) s'étendant à travers la pièce de transmission de force et, de là, s'étendant à l'intérieur dudit prolongement tubulaire vers lesdits moyens (104) coopérant avec ladite partie expansible et aplatissable (84, 86, 88).

7. Outil selon la revendication 6, caractérisé par le fait que ladite partie expansible et aplatissable (84, 86, 88) est une partie d'extrémité axialement segmentée dudit prolongement tubulaire (76), comportant un rebord segmenté (88) qui fait saillie radialement vers l'extérieur à partir de ce prolongement tubulaire.

8. Outil selon la revendication 7, caractérisé par le fait que lesdits moyens (104), qui coopèrent avec la partie expansible et aplatissable (84, 86, 88), comprennent une pièce conique qui est déplacée axialement dans une direction, afin d'agrandir de façon élastique ladite partie d'extrémité segmentée, en même temps que son rebord segmenté, lors du mouvement dudit agencement de tige (78) vers l'une desdites positions axiales, et qui est déplacée axialement dans la direction opposée, afin de permettre à la partie d'extrémité segmentée élastiquement agrandie, en même temps que son rebord segmenté, de reprendre un état non agrandi, lors du mouvement de l'agencement de tige vers ladite autre position axiale.

9. Outil selon la revendication 8, caractérisé par le fait que ledit agencement de tige (78) comprend une tige (90) disposée dans la pièce tubulaire (56) de transmission de force, et un prolongement (92) de tige disposé dans ledit prolongement tubulaire (76), ledit prolongement (92) de tige étant connecté à l'une de ses extrémités à ladite tige (90), et ayant ladite pièce conique 104 disposée à son autre extrémité.

10. Outil selon l'une quelconque des revendications précédentes, caractérisé par le fait que lesdits moyens (120) d'actionnement comprennent un bouton rotatif (122) accouplé par filetage à une extrémité (108) dudit arbre (78), de telle manière que la rotation dudit bouton (122) dans des directions opposées provoque des mouvements de l'agencement de tige vers lesdites positions respectives axiales.

## Fig. 1

# Fig. 2

Fig. 3

Fig. 4

Fig. 5

Fig. 6

EP 0 182 149 B1